# EUROPÄISCHE PATENTSCHRIFT

(11) **EP 2 150 377 B1**
(45) Veröffentlichungstag und Bekanntmachung des Hinweises auf die Patenterteilung: **15.06.2011**
(21) Anmeldenummer: 08735355.3
(22) Anmeldetag: 22.04.2008
(51) Int. Cl.: B24B 41/06

(54) **VIBRATIONSFREIES BEARBEITEN VON PILGERDORNEN**
VIBRATION-FREE MACHINING OF PIERCERS
USINAGE SANS VIBRATIONS DE MANDRINS À PAS DE PÈLERIN

(30) Priorität: 24.04.2007 DE 102007019588
(43) Veröffentlichungstag der Anmeldung: 10.02.2010
(73) Patentinhaber: Egger, Christian, 38490 Charancieu (FR)
(72) Erfinder: Egger, Christian, 38490 Charancieu (FR)
(74) Vertreter: Jeck, Anton
(86) Internationale Anmeldenummer: PCT/EP2008/003226
(87) Internationale Veröffentlichungsnummer: WO 2008/128758

(56) Entgegenhaltungen:
- DE-U1- 8 623 648
- US-A- 5 527 210
- US-A1- 2005 239 376
- US-B1- 6 273 785
- US-B1- 6 568 096

## Beschreibung

Die Erfindung betrifft eine Lünette zum vibrationsfreien Halten eines mittels einer Schleifscheibe zu bearbeitenden, an seinen beiden Enden eingespannten Werkstücks, insbesondere eines Pilgerdorns, zwischen dessen Enden.

Zur Herstellung von Rohren wird ein Blech beispielsweise in Form eines von einer Rolle abgewickelten Endlosbandes einer Vorrichtung zugeführt, in der das Blech in einem kontinuierlichen Vorgang durch Formrollen und/oder Formwalzen um einen schwimmend gelagerten Pilgerdorn herum, bei Bedarf auch doppelwandig, zu einem Rohr geformt wird. Ein Pilgerdorn besteht hierzu vorzugsweise aus einem Schaft, um den herum zunächst das Rohr geformt wird, und einem oder mehrere das Rohr auf einen gewünschten Innendurchmesser aufweitenden Kaliber. Nach dem Aufweiten des Rohres auf den gewünschten Endinnendurchmesser wird das Rohr durch einen Löt- oder Schweißvorgang im gesamten überlappenden Bereich des Blechs bzw. im Bereich der parallel verlaufenden Stoßkanten beispielsweise durch Verlöten oder Verschweißen längs verschlossen. Anschließend erfolgt eine Qualitätskontrolle, beispielsweise durch einen Röntgenvorgang.

Handelt es sich bei den so hergestellten Rohren um Präzisionsrohre, werden besonders hohe Anforderungen unter anderem an die Einhaltung der Innenabmessungen gestellt. Insofern werden zur Herstellung insbesondere von Präzisionsrohren sehr präzise Pilgerdorne benötigt.

Ein wesentlicher Bearbeitungsschritt bei der Herstellung von Pilgerdornen ist das Bearbeiten mit einer Schleifscheibe bzw. -walze. Die Begriffe Schleifscheibe und - walze werden nachfolgend gleichwertig verwendet. Hierbei wird der gegebenenfalls aus mehreren Einzelteilen zusammengesetzte und gehärtete Pilgerdorn parallel zur Rotationsachse der Schleifscheibe eingespannt und mittels einer entlang des Pilgerdorns verfahrbaren Schleifscheibe geschliffen. Ein bekanntes und wesentliches Problem dabei ist, dass der lange und dünne Pilgerdorn beim Kontakt mit der Schleifscheibe quer zur Drehachse der Schleifscheibe auswandert. Dies führt zu so genannten Rattermarken in der geschfiffenen Oberfläche.

Zur Herstellung von Pilgerdornen ist bekannt, eine automatische (NC; Numerical Controlled) gesteuerte Lünette gegenüber der Schleifscheibe zeitgleich mitzuführen. Nachteilig hieran ist, dass bei diesem Bearbeitungsvorgang die im Härteprozess entstandenen Werkstückspannungen nicht gelöst werden und nach dem Ausfahren der Lünette einen Schlag, erkennbar durch einen schlechten Rundlauf des Werkstücks, erzeugen.

Darüber hinaus sind selbstzentrierende, hydraulische Drei-Punkt Lünetten bekannt, die zum Werkstück ortsbezogen sind. Diese Lünettentypen haben folgende Nachteile:
Sie haben nicht die Eigenschaft vibrationsdämpfend zu wirken, im Gegenteil, die Rattermarken am Werkstück werden durch das hydraulische Zustellsystem noch verstärkt. Auch der Einsatz mehrerer dieser Lünettentypen verteilt auf die Werkstücklänge bringt keine Besserung.
Wenn diese Lünetten zum Werkstück ortsbezogen eingesetzt werden, haben sie zusätzlich den Nachteil, dass jedes mal, wenn über die Lünettenstelle gefahren wird, ein Absatz am Werkstück entsteht, hervorgerufen durch die schneckenartige Zustellbewegung.

Durch US 7,008,294 B2 ist eine Vorrichtung zur Stabilisierung eines Werkstücks während einer Bearbeitung mit einer Schleifscheibe bekannt. Um in Folge des Kontakts mit der Schleifscheibe entstehende Vibrationen des Werkstücks in einer Querrichtung zu verringern, wird vorgeschlagen, einen gepolsterten Körper auf der der Schleifscheibe gegenüberliegenden Seite der Schleifwalze anzuordnen und gegen das Werkstück anzudrücken. Der gepolsterte Körper kann pneumatisch gegen die Schleifscheibe angestellt werden. Der gepolsterte Körper passt sich zumindest teilweise der Kontur der Schleifwalze an. Der gepolsterte Körper besteht aus einem elastischen Feststoff, oder aus einer elastischen äußeren Haut, die mit einem kompressiblen, unter Druck stehenden Medium gefüllt ist. Der Anpressdruck des gepolsterten Körpers gegen die Schleifwalze ist veränderbar. Eine Schwingungsdämpfung wird durch die Anpresskraft des gepolsterten Körpers gegen das sich zumindest teilweise gegen die die Schwingung anregende Schleifscheibe abstützenden Werkstücks erreicht.

Durch US 5,527,210 ist eine Stützvorrichtung für ein um seine Längsachse drehbar gelagertes Werkstück während einer Bearbeitung mit einer Schleifscheibe bzw. - walze bekannt. Die Stützvorrichtung umfasst einen das Werkstück entgegen der Drehrichtung der Schleifscheibe stützenden Arm, welcher mit einem Hebel verbunden und um eine horizontale Schwenkachse schwenkbar gelagert ist. An dem Hebel sind Gegengewichte anordbar. Eine Schwingungsdämpfung wird durch die einer Auswanderung des Werkstücks in Drehrichtung der Schleifscheibe entgegenwirkende, durch die Gewichtskraft der Gegengewichte und das Übersetzungsverhältnis von Hebel und Arm begrenzte Stützkraft erzeugt.

Nachteilig hieran ist, dass bedingt durch die Konstruktionsweise keine großen Kräfte auf das Werkstück ausgeübt werden können, weil ansonsten das Werkstück weggedrückt wird und dann keine genaue Maß- und Geradlinigkeit am Werkstück mehr erreicht werden kann. Insbesondere wird in beiden Fällen die schwingungsdämpfende Kraft durch eine einseitige Druckkraft erzeugt, deren Gegenkraft durch das Werkstück aufgebracht wird. Die schwingungsdämpfende Kraft ist somit durch eine einsetzende Durchbiegung des Werkstücks bzw. durch eine einsetzende Beeinträchtigung der Bearbeitungsgenauigkeit des Werkstücks begrenzt. Außerdem können Schwingungen des Werkstücks nur in einer ersten, parallel zur Drehachse verlaufenden Ebene gedämpft werden, wohingegen sie in einer zweiten, ebenfalls parallel zur Drehachse und senkrecht zur ersten Ebene verlaufenden Ebene ungedämpft bleiben.

### Technische Aufgabe der Erfindung:

Eine Aufgabe der Erfindung ist, eine Lünette zum vorzugsweise vibrationsfreien Halten eines mittels einer Schleifscheibe zu bearbeitenden, an seinen beiden Enden eingespannten Werkstücks, insbesondere eines Pilgerdorns, zwischen dessen Enden zu entwickeln.

### Offenbarung der Erfindung und deren Vorteile:

Die Aufgabe wird gelöst durch die Merkmale des Anspruchs 1.

Eine erfindungsgemäße Lünette zum vibrationsfreien Halten eines insbesondere mittels einer Schleifscheibe zu bearbeitenden, an seinen beiden Enden eingespannten Werkstücks, insbesondere eines Pilgerdorns, zwischen dessen Enden, umfasst demnach einen ortsfest zu dem Werkstück angeordneten Fuß sowie eine das Werkstück mindestens von zwei gegenüberliegenden Seiten umgreifende Klammer, in welche das Werkstück unter einer von auf die räumliche Lage des Werkstücks einwirkenden äußeren Kräften unabhängigen Klemmkraft einspannbar ist. Die Klammer umgreift das Werkstück dabei derart, dass im Bereich der Klammer auf der der Schleifscheibe zugewandten Seite des Werkstücks eine Bearbeitung durchführbar ist. Die Klammer ist in mindestens einer Richtung senkrecht zu einer Längsachse des Werkstücks schwimmend gelagert, so dass die Klammer gegenüber dem Werkstück selbstzentrierend ist, und das Werkstück durch die schwimmend gelagerte Klammer frei von die räumliche Lage und den Spannungszustand des Werkstücks ändernden äußeren Kräften gehalten wird. Außerdem werden durch die schwimmende Lagerung der Klammer Bewegungen des Werkstücks senkrecht zu dessen Längsachse durch die Massenträgheit der Klammer gedämpft.

Es ist ersichtlich, dass die Erfindung in jedem Fall durch mindestens eine schwimmend gelagerte Lünette verwirklicht ist, welche das Werkstück nicht an einem definierten Ort hält und einzwängt, sondern das Werkstück führt und unterstützt. Hierdurch behält das Werkstück während der Bearbeitung seinen vollen Freiheitsgrad. Im Härteprozess entstandene Werkstückspannungen können so während der Vorschrupp Bearbeitung abgebaut bzw. egalisiert werden. Die Lünette läuft dabei zunächst mit dem Schlag des Werkstückes mit. Nach den ersten Vorschrupphüben beruhigt sich dann das Werkstück und damit auch die Lünette. Einen eventuellen Schlag kann an der Bewegung der Lünette leicht abgelesen werden. Natürlich hat die Lünette auch ein gewisses Trägheitsmoment, was sich auf das durch die Schleifscheibe verursachte Wegdrücken des Werkstücks positiv auswirkt. Dieses Wegdrücken ist in praktischen Versuchen auf einige Tausendstel Millimeter ermittelt worden. Dieser kleine Fehler kann durch das Anstellen mindestens eines Vibrations-Mess-Fingers gegenüber der Schleifscheibe, vorzugsweise in der Werkstückmitte kompensiert werden.

Die schwimmend gelagerte, dynamische frei am Werkstück aufliegende Klammer bildet zusammen mit dem ortsfest gegenüber dem Werkstück anordbaren Fuß eine frei schwimmende Zwei-Punkt Lünette, die keine horizontalen oder axialen Kräfte auf das Werkstück ausübt. Diese frei schwimmende Lünette hilft dem Werkstück seine eigene natürliche Lage zu behalten, damit nach der erfolgten Bearbeitung das Werkstück spannungsfrei ist, und dadurch geradlinig und schlagfrei wird. Die im Werkstück vom Härtevorgang vorhandenen Spannungen werden durch die frei schwimmende Lünette beim Bearbeitungsvorgang freigegeben. Durch die erfindungsgemäße Lünette kann so ein perfekter Rundlauf des Werkstücks erzeugt werden. Durch die das Werkstück mindestens von zwei gegenüberliegenden Seiten umgreifende Klammer ist der schwimmend gelagerte Teil der Lünette bewegungsgekoppelt mit dem Werkstück, wodurch die Werkstück-Stabilität unterstützt wird. Die gegenüber dem Werkstück ein hohes Massenträgheitsmoment aufweisende Klammer hilft dem Werkstück dabei, nicht in einen ungewünschten Schwingungszustand zu kommen, was sich sonst in Rattermarken an der Werkstück-Oberfläche äußern würde. Durch die freie gegenüberliegende Kräfteanordnung der auch als Lünetten-Kontakt-Punkte bezeichneten Kontaktstellen zwischen Klammer und Werkstück kann mit hohem Druck bzw. mit einer hohen Klemmkraft auf das Werkstück eingewirkt werden, ohne es aus seiner Lage zu drücken. Dabei wird der Dämpfungseffekt extrem erhöht und somit können rattermarkenfreie Werkstücke hergestellt werden. Durch die schwimmende Klammer der Lünette ist es auch erstmals möglich lange, unrunde, beispielsweise polygonförmige Wellen oder Pilgerdome herzustellen. Um den Dämpfungseffekt zu verstärken, können mehrere Lünetten vorzugsweise in kurzem Abstand hintereinander folgend über die gesamte Werkstücklänge verteilt werden.

Eine vorteilhafte Ausgestaltung der Erfindung sieht vor, dass an der Klammer Gewichte anordbar sind, zur Anpassung der Massenträgheit der Klammer an eine zur vibrationsfreien Bearbeitung des Werkstücks erforderliche, vorgebbare Dämpfung. Mittels verstellbarer Gegengewichte kann die Kräfteeinwirkung der auch als Lünetten-Kontakt-Punkte bezeichneten Kontaktstellen zwischen Klammer und Werkstück gleichmäßig eingestellt werden, damit keine Kräfte in einer unerwünschten Richtung das Werkstück aus seiner natureigenen Lage drücken.

Die Gewichte sind vorzugsweise aus einem vibrationsdämpfenden Material hergestellt. Die Gewichte können gleichzeitig zur Aufbringung einer das Werkstück in der Klammer haltenden Klemmkraft dienen.

Vorzugsweise ist die Klammer im Bereich der Kontaktstellen zwischen Werkstück und Klammer mit frei beweglichen, auswechselbaren Einsätzen versehen, durch deren Auswechslung eine Anpassung der Klammer an unterschiedliche Werkstücke, beispielsweise an unterschiedliche Werkstückdurchmesser durchführbar ist, und/oder durch deren Auswechslung eine unterschiedliche Zahl von Kontaktstellen zwischen Werkstück und Klammer herstellbar sind. Durch an der Klammer angeordnete, frei bewegliche, die Kontaktstellen bzw. Lünetten-Kontakt-Punkte zwischen Werkstück und Klammer bildende V-Einsätze kann eine Zwei-Punkt Lünette, welche lediglich zwei Kontaktstellen zwischen Klammer und Werkstück aufweist, auf eine Drei- oder Vier-Punkt Lünette, welche drei oder vier Kontaktstellen zwischen Klammer und Werkstück aufweist, erweitert werden. Um mit derselben Lünette verschiedene Werkstück-Durchmesser abdecken zu können, ist es denkbar, auswechselbare, fixe oder frei bewegliche V-Kontakt-Punkt Einsätze vorzusehen.

Eine andere vorteilhafte Ausgestaltung der Erfindung sieht vor, dass der Fuß der Lünette magnetisch ist, um die Lünette und damit die auch die Lage der als Lünetten-Kontakt-Punkte bezeichneten Kontaktstellen zwischen Klammer und Werkstück werkzeugfrei entlang der Längsachse des Werkstücks maschinenunabhängig einstellen zu können.

Ebenso kann die Klammer gegenüber dem Fuß höhenverstellbar sein, um die Lage der Kontaktstellen auf unterschiedliche Spitzenhöhen einstellen zu können, bzw. um die Lünette an Maschinentypen mit unterschiedlichen Spitzenhöhen, zwischen denen das Werkstück eingespannt wird, anpassen zu können.

Die Lünette verfügt vorzugsweise über beispielsweise zwischen Fuß und Klammer und/oder an der Klammer und/oder im Bereich der Kontaktstellen zwischen Klammer und Werkstück und/oder zwischen Klammer und Gewichten angeordnete Mittel zur aktiven Schwingungsdämpfung von durch einen Kontakt zwischen Schleifscheibe und Werkstück entstehenden Vibrationen. Die Mittel zur aktiven Schwingungsdämpfung umfassen vorzugsweise mindestens ein Piezoelement aus mehreren übereinander gestapelten Piezolagen, bei dem durch Anlage einer äußeren Spannung eine mechanische Reaktion in Form eines Drucks oder eines Zugs in eine vorgebbare, entgegen einer Auslenkung des Werkstücks wirkenden Richtung erfolgt. Durch den einstellbaren hohen Anpressdruck im Bereich der Kontaktstellen zwischen Werkstück und der das Werkstück mindestens von zwei gegenüberliegenden Seiten umgreifenden Klammer wird der Einsatz aktiver Schwingungsdämpfer in Form von beispielsweise im Bereich der Kontaktstellen angeordneten Piezoelementen erst möglich und es können so mögliche Vibrationen während der Bearbeitung zusätzlich unterdrückt werden. Grundsätzlich ist auch denkbar, mittels der Piezoelemente auf die Gewichte einzuwirken, so dass durch eine Verschiebung der Gewichte relativ zur Klammer bewirkende Beschleunigung eine einer Auslenkung des Werkstücks entgegenwirkende Kraft erzeugt wird.

Eine zusätzliche, vorteilhafte Ausgestaltung der Erfindung sieht vor, dass die Lünette über Mittel zur Erfassung von vorzugsweise Amplitude und Richtung von Vibrationen verfügt. Mittels integrierter Vibrationsmesseinrichtungen kann die Produktions-Sicherheit erhöht werden, beispielsweise wenn wegen bei zu hohen Bearbeitungs-Vorschubwerten das Werkstück in Schwingung kommt, kann sofort ein Bearbeitungsabbruch über die Maschinensoftware herbeigeführt werden. Außerdem können die Mittel zur Erfassung von Vibrationen zur Steuerung der Mittel zur aktiven Schwingungsdämpfung verwendet werden.

Eine besonders vorteilhafte Ausgestaltung der Erfindung sieht vor, dass die in mindestens einer Richtung senkrecht zu einer Längsachse des Werkstücks schwimmende Lagerung der Klammer mindestens ein zwischen Fuß und Klammer angeordnetes, mindestens eine parallel zur Längsachse des Werkstücks verlaufende Schwenkachse aufweisendes Gelenk umfasst.

Die Klammer gegenüber dem Fuß von einer Ausweichposition, in der die Klammer nicht in Kontakt mit dem Werkstück bringbar ist, in eine Eingreifposition verschwenkbar ist, in der die Klammer in Kontakt mit dem Werkstück bringbar ist. Um ein einfaches Beladen der Werkstücke in eine Werkzeugmaschine zu gewährleisten, sind vorzugsweise Lünetten-Parkiermöglichkeiten vorgesehen. Diese können beispielsweise durch Mittel zum Verschwenken der Klammer gegenüber dem Fuß verwirklicht sein.

Eine andere, besonders vorteilhafte Ausgestaltung der Erfindung sieht vor, dass im Bereich der Kontaktstellen zwischen Klammer und Werkstück Kühlmittel-Düsen angeordnet sind. An den die Kontaktstellen zwischen Werkstück und Klammer bildenden Lünetten-Kontakt-Punkten integrierte, hydrostatische Kühlwasser-Düsen verhindern das Auftreten von Oberflächen-Markierungen am Werkstück, und wirkt zudem schwingungsdämpfend.

Wichtig ist hervorzuheben, dass die erfindungsgemäße Lünette nicht auf eine Verwendung bei der Herstellung von Pilgerdornen beschränkt ist, sondern überall dort anwendbar ist, wo lange, dünne Werkstücke, wie etwa profilierte Wellen oder Rohre, einer Schleifbearbeitung unterzogen werden müssen.

Die Erfindung wird nun anhand von Ausführungsbeispielen näher erläutert. Es zeigen:
- Fig. 1: eine perspektivische Ansicht einer Vorrichtung zum Bearbeiten eines an seinen beiden Enden eingespannten und zwischen seinen Enden durch mehrere Lünetten gehaltenen Werkstücks mittels einer Schleifscheibe,
- Fig. 2: eine Ansicht einer Lünette der Vorrichtung aus Fig. 1 in einer Blickrich- tung parallel zur Längsachse des Werkstücks,
- Fig. 3: eine Detailansicht eines ersten Ausführungsbeispiels der Lünette aus Fig. 2 in einer Blickrichtung parallel zur Längsachse des Werkstücks,
- Fig. 4: eine Detailansicht eines zweiten Ausführungsbeispiels der Lünette aus Fig. 2 in einer Blickrichtung parallel zur Längsachse des Werkstücks,
- Fig. 5: eine Detailansicht eines dritten Ausführungsbeispiels der Lünette aus Fig. 2 in einer Blickrichtung parallel zur Längsachse des Werkstücks,
- Fig. 6: eine Detailansicht einer Lünette der Vorrichtung aus Fig. 1, bei der zur besseren Übersichtlichkeit ein gemeinsam mit einem ersten Greifarm eine Klammer bildender, zweiter Greifarm entfernt wurde,
- Fig. 7: eine perspektivische Ansicht der Lünette aus Fig. 6 in einer Explosions- darstellung, sowie
- Fig. 8: eine perspektivische Ansicht der Lünette aus Fig. 2 in einer Explosions- darstellung.

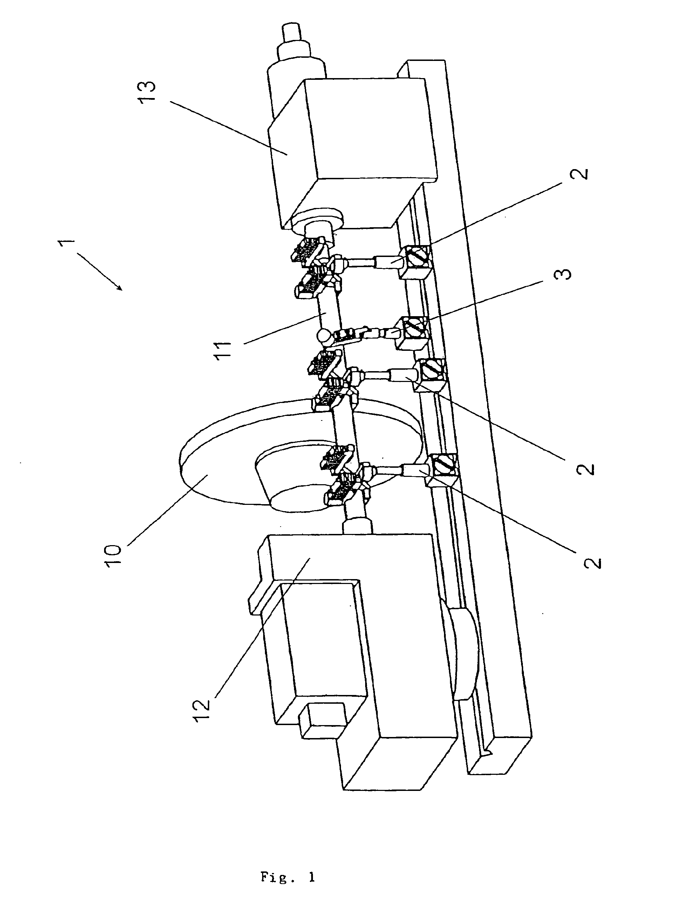

Bei einer in Fig. 1 dargestellte Vorrichtung 1 zum Bearbeiten eines an seinen beiden Enden eingespannten Pilgerdorns 11 mittels einer Schleifscheibe 10 sind drei Lünetten 2 vorgesehen, die den Pilgerdorn 11 zwischen seinen Enden vibrationsfrei halten. Der Pilgerdorn 11 ist zwischen zwei Spitzen 12, 13 der Vorrichtung 1, von denen eine angetrieben ist, eingespannt. Ein Vibrations-Mess-Finger 3 dient der Messung von durch den Kontakt des Pilgerdorns 11 mit der Schleifscheibe 10 entstehenden Vibrationen bzw. Auslenkungen. Mittels des Vibrations-Mess-Fingers 3 kann die Produktions-Sicherheit erhöht werden, beispielsweise indem wenn wegen zu hoher Bearbeitungs-Vorschubwerten das Werkstück 11 in Schwingung kommt, sofort ein Bearbeitungsabbruch über die Maschinensoftware herbeigeführt werden kann.

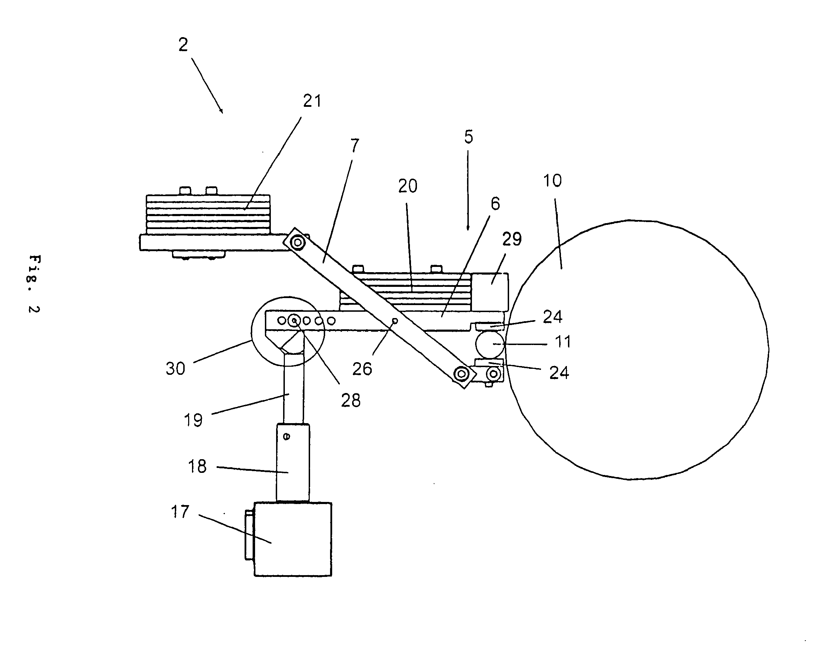

Die in den in den Fig. 2, 3, 4 und 5 dargestellten Lünetten 2 bestehen jeweils aus einem ortsfest gegenüber dem Werkstück 11 an der Vorrichtung 1 (Fig. 1) anordbaren Fuß 17, sowie einer das Werkstück 11 mindestens von zwei gegenüberliegenden Seiten umgreifenden Klammer 5, in welche das Werkstück 11 unter einer von auf die räumliche Lage des Werkstücks 11 einwirkenden äußeren Kräften unabhängigen Klemmkraft einspannbar ist. Der Fuß 17 der Lünette 2 ist magnetisch, um die Lünette 2 und damit die auch die Lage der Kontaktstellen zwischen Klammer 5 und Werkstück 11 werkzeugfrei entlang der Längsachse des Werkstücks 11 maschinenunabhängig einstellen zu können. Die Klammer 5 umgreift das Werkstück 11 dabei derart, dass im Bereich der Klammer 5 auf der der Schleifscheibe 10 zugewandten Seite des Werkstücks 11 eine Bearbeitung durchführbar ist. Die Klammer 5 ist in einer Richtung senkrecht zur Längsachse des Werkstücks 11 schwimmend gelagert, so dass die Klammer 5 gegenüber dem Werkstück 11 selbstzentrierend ist, und das Werkstück 11 durch die schwimmend gelagerte Klammer 5 frei von die räumliche Lage und den Spannungszustand des Werkstücks 11 ändernden äußeren Kräften gehalten wird. Die Klammer 5 wird durch einen ersten Greifarm 6 und durch einen zweiten Greifarm 7 gebildet, die durch eine Achse 26 gelenkig miteinander verbunden sind. Die schwimmende Lagerung der Klammer 5 wird durch ein zwischen Fuß 17 und Klammer 5 angeordnetes, eine parallel zur Längsachse des Werkstücks 11 verlaufende Schwenkachse 28 aufweisendes Gelenk 30 gebildet, über das der erste Greifarm mit dem Fuß 17 verbunden ist.

Durch die schwimmende Lagerung der Klammer 5 werden Bewegungen des Werkstücks 11 senkrecht zu dessen Längsachse durch die Massenträgheit der Klammer 5 gedämpft. An der Klammer 5 sind Gewichte 20, 21 anordbar, zur Anpassung der Massenträgheit der Klammer 5 an eine zur vibrationsfreien Bearbeitung des Werkstücks 11 erforderliche, vorgebbare Dämpfung. Die Gewichte 20, 21 dienen außerdem gleichzeitig zur Aufbringung einer das Werkstück in der Klammer haltenden Klemmkraft. Mittels der verstellbaren Gewichte 20, 21 kann die Kräfteeinwirkung der Kontaktstellen zwischen Klammer 5 und Werkstück 11 gleichmäßig eingestellt werden, so dass keine Kräfte das Werkstück 11 aus seiner natureigenen Lage drücken. Die Gewichte 20, 21 sind dabei so an den beiden Greifarmen 6, 7 angeordnet, dass durch die Hebelgesetze keine auf die Lage des Werkstücks 11 einwirkenden Kräfte entstehen, sondern nur eine das Werkstück 11 haltende Klemmkraft erzeugt wird.

Die Gewichte 20, 21 sind aus einem vibrationsdämpfenden Material hergestellt.

Die Klammer 5 ist im Bereich der Kontaktstellen zwischen Werkstück 11 und Klammer 5 mit frei beweglichen, auswechselbaren Einsätzen 24, 25 versehen, durch deren Auswechslung eine Anpassung der Klammer 5 an unterschiedliche Werkstücke 11, beispielsweise an unterschiedliche Werkstückdurchmesser durchführbar ist, und/oder durch deren Auswechslung eine unterschiedliche Zahl von Kontaktstellen zwischen Werkstück 11 und Klammer 5 herstellbar sind.

Die in den Fig. 2, 3, 4 und 5 dargestellten Lünetten 2 unterscheiden sich dabei nur durch die Wahl und durch die Kombination der Einsätze 24, 25.

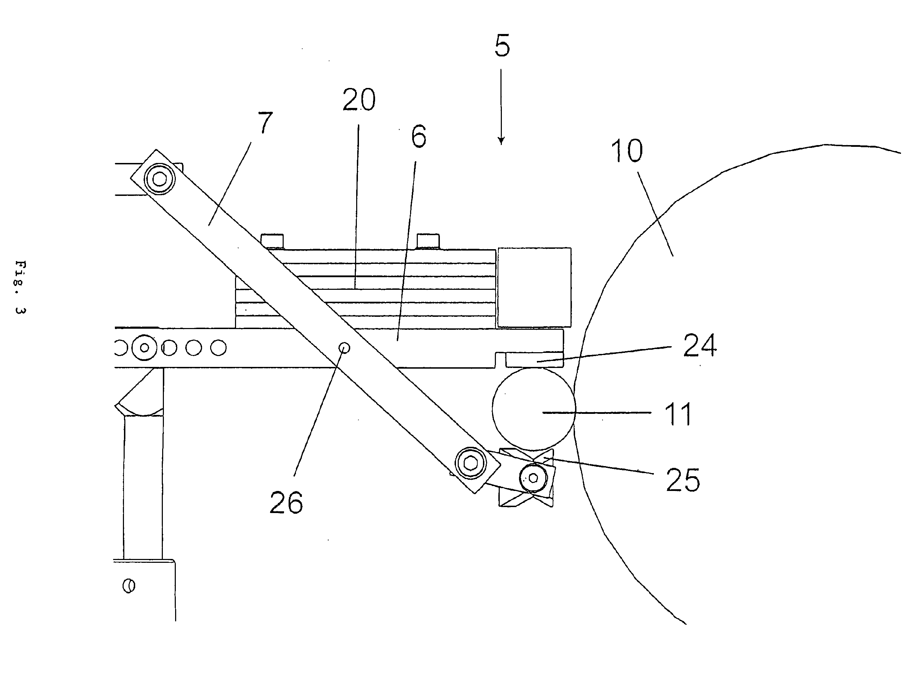

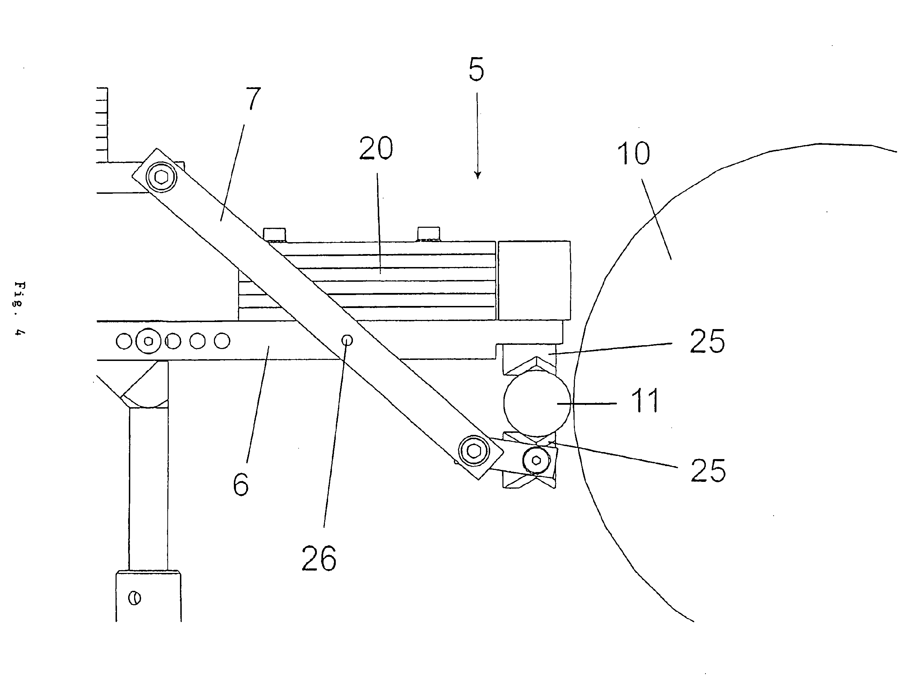

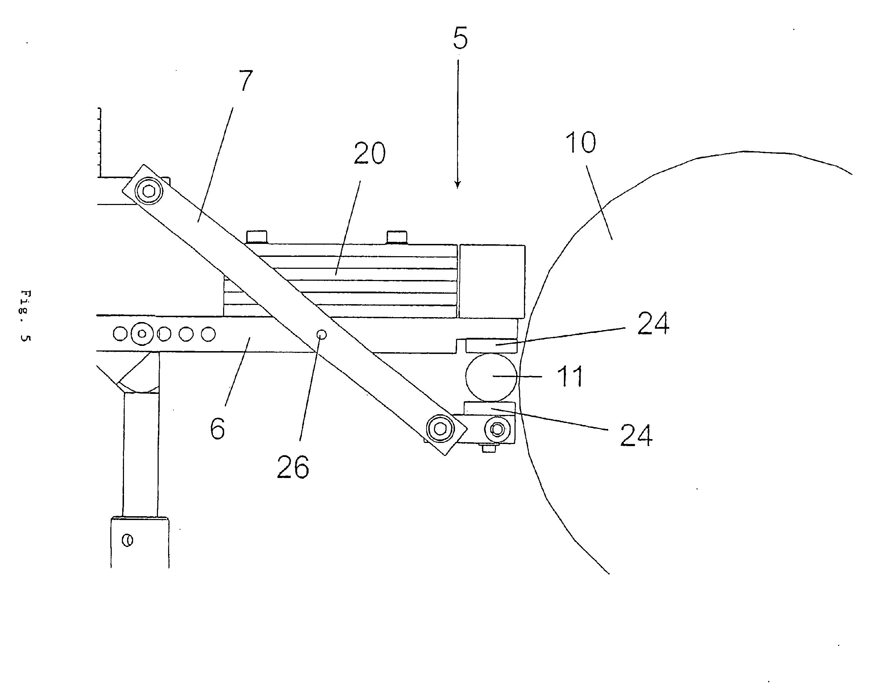

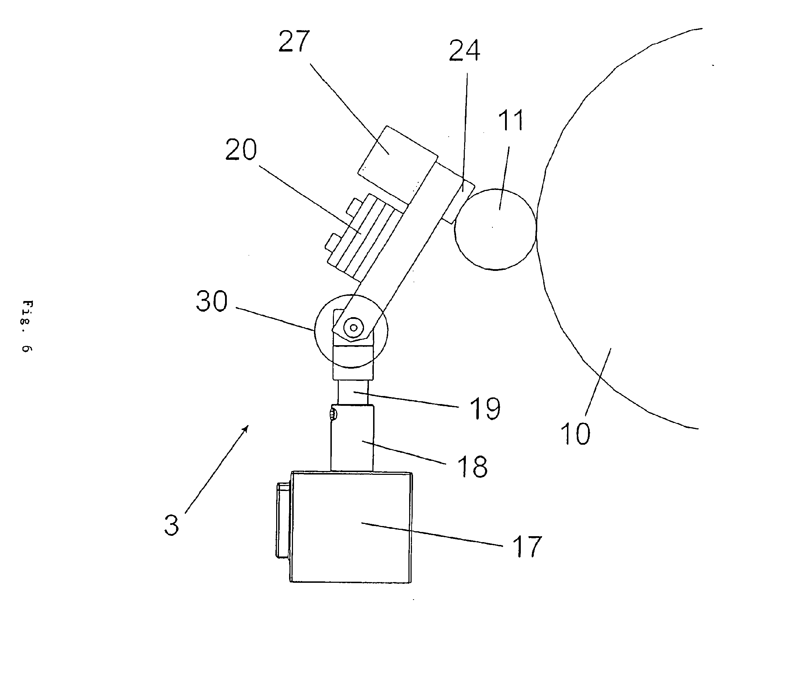

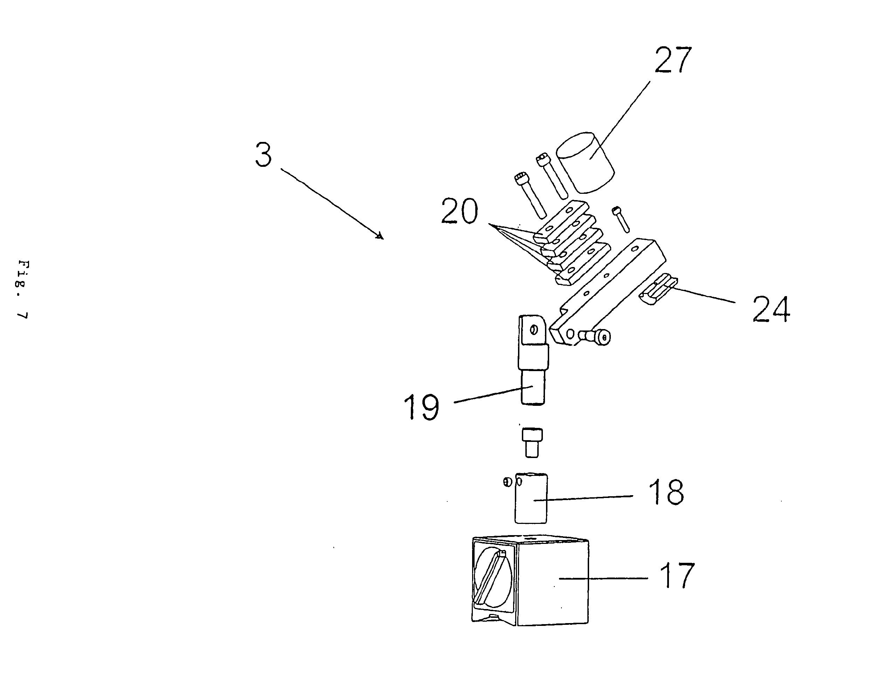

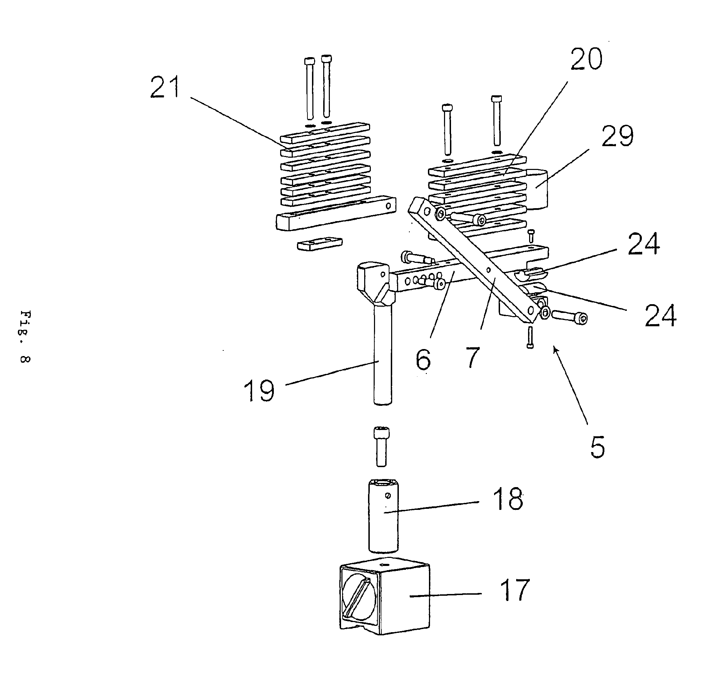

So sind die Einsätze 24, wie in den Fig. 5, 6, 7 und 8 deutlich zu erkennen, in einer Blickrichtung senkrecht zur Längsachse des Werkstücks 11 halbkreisförmig, und in einer Blickrichtung parallel zur Längsachse eben ausgebildet. Ein solcher Einsatz bildet eine Kontaktstelle zwischen Klammer 5 und Werkstück 11. Demgegenüber sind die Einsätze 25, wie in den Fig. 3 und 4 deutlich zu erkennen, in einer Blickrichtung parallel zur Längsachse des Werkstücks 11 V-förmig ausgebildet. Ein solcher Einsatz bildet zwei Kontaktstellen zwischen Klammer 5 und Werkstück 11.

Die Klammer 5 ist gegenüber dem Fuß 17 höhenverstellbar, um die Lage der Kontaktstellen auf unterschiedliche Spitzenhöhen einstellen zu können, bzw. um die Lünette 2 an Vorrichtungen 1 mit unterschiedlichen Spitzenhöhen, zwischen denen das Werkstück 11 eingespannt wird, anpassen zu können. Am Fuß 17 ist hierzu ein Rohr 18 angesetzt, in dem ein Schaft 19 höhenverstellbar und um eine durch die Längsachse des Rohres 18 und den Schaft 19 gebildete Schwenkachse schwenkbar angeordnet ist. Durch die Schwenkachse ist die Klammer 5 gegenüber dem Fuß 17 von einer Ausweichposition, in der die Klammer 5 nicht in Kontakt mit dem Werkstück 11 bringbar ist, in eine Eingreifposition verschwenkbar, in der die Klammer 5 in Kontakt mit dem Werkstück 11 bringbar ist.

Eine Lünette 2 ist nochmals in einer Explosionsdarstellung gezeigt. Dabei sind dieselben Bezugszahlen wie in Fig. 2 verwendet.

Wichtig ist hervorzuheben, dass eine Grundidee der Erfindung das spannungs- und vibrationsfreie Bearbeiten durch Schleifen oder Drehen von langen, dünnen Wellen oder rohrartigen Werkstücken in einer Bearbeitungsmaschine mittels einer oder mehrerer schwimmend gelagerter, selbstzentrierender und gleichzeitig Schwingungsbewegungen bzw. Vibrationen quer zu einer Längsachse des Werkstücks dämpfenden Lünetten ist. Hierdurch wird ein wesentliches Problem beim Pilgerdornschleifen gelöst, das durch Vibrationen in Form von Querschwingungen hervorgerufen durch die Schleifscheiben-Berührung am Werkstück verursacht wird. Werkstücke frei von Rattermarken können nur mit hohen Kontakt-Klemmkräften, vorzugsweise über die gesamte Werkstücklänge verteilt, gedämpft werden. Beim Einsatz von aktiven Schwingungsdämpfern ist es ebenso eine Voraussetzung, mit großen Kräften auf die Werkstückoberfläche zu wirken. Die erfindungsgemäße Lünette erlaubt einerseits mit hoher Klemmkraft bzw. mit hohem Anpressdruck auf den Werkstückdurchmesser einzuwirken, um einen hohen Dämpfungseffekt zu erzielen, und andererseits die natureigene Werkstückachse zu belassen, um schlussendlich einen perfekten Rundlauf mit vibrationsfreier Oberfläche am Werkstück zu erreichen. Darüber hinaus erlaubt die erfindungsgemäße Vorrichtung den Einsatz aktiver Schwingungsdämpfer, beispielsweise in Form von Piezokristallen.

Die Erfindung ist insbesondere im Bereich der Herstellung von Pilgerdornen gewerblich anwendbar.

## Patentansprüche

1. Lünette (2) zum vibrationsfreien Halten eines insbesondere mittels einer Schleifscheibe (10) zu bearbeitenden, an seinen beiden Enden eingespannten Werkstücks (11), insbesondere eines Pilgerdorns (11), zwischen dessen Enden,
**dadurch gekennzeichnet,**
**dass** die Lünette (2) einen ortsfest zu dem Werkstück (11) angeordneten Fuß (17) sowie eine das Werkstück (11) mindestens von zwei gegenüberliegenden Seiten umgreifende Klammer (5) umfasst, in welche das Werkstück (11) unter einer Klemmkraft einspannbar ist, wobei die Klammer (5) das Werkstück (11) derart umgreift, dass im Bereich der Klammer (5) auf der der Schleifscheibe (10) zugewandten Seite des Werkstücks (11) eine Bearbeitung durchführbar ist, und wobei die Klammer (5) in mindestens einer Richtung senkrecht zu einer Längsachse des Werkstücks (11) schwimmend gelagert ist, so dass die Klammer (5) gegenüber dem Werkstück (11) selbstzentrierend ist, und das Werkstück (11) durch die schwimmend gelagerte Klammer (5) frei von die räumliche Lage des Werkstücks (5) ändernden äußeren Kräften gehalten wird und Bewegungen des Werkstücks (11) senkrecht zu dessen Längsachse durch die Massenträgheit der Klammer (5) gedämpft werden.

2. Lünette nach Anspruch 1,
**dadurch gekennzeichnet,**
**dass** an der Klammer (5) Gewichte (20, 21) anordbar sind, zur Anpassung der Massenträgheit der Klammer (5) an eine vorgebbare Dämpfung.

3. Lünette nach Anspruch 2,
**dadurch gekennzeichnet,**
**dass** die Gewichte (20, 21) aus einem vibrationsdämpfenden Material hergestellt sind.

4. Lünette nach Anspruch 2 oder 3,
**dadurch gekennzeichnet,**
**dass** die Gewichte (20, 21) gleichzeitig zur Aufbringung einer das Werkstück (11) in der Klammer (5) haltenden Klemmkraft dienen.

5. Lünette nach einem der vorhergehenden Ansprüche,
**dadurch gekennzeichnet,**
**dass** die Klammer (5) im Bereich der Kontaktstellen zwischen Werkstück und Klammer mit auswechselbaren Einsätzen (24, 25) versehen ist, durch deren Auswechslung eine Anpassung der Klammer (5) an unterschiedliche Werkstücke (11) durchführbar ist, und/oder durch deren Auswechslung eine unterschiedliche Zahl von Kontaktstellen zwischen Werkstück (11) und Klammer (5) herstellbar sind.

6. Lünette nach einem der vorhergehenden Ansprüche,
**dadurch gekennzeichnet,**
**dass** der Fuß (17) magnetisch ist.

7. Lünette nach einem der vorhergehenden Ansprüche,
**dadurch gekennzeichnet,**
**dass** die Klammer (5) gegenüber dem Fuß (17) höhenverstellbar ist.

8. Lünette nach einem der vorhergehenden Ansprüche,
**dadurch gekennzeichnet,**
**dass** die Lünette (2) über Mittel zur aktiven Schwingungsdämpfung von durch einen Kontakt zwischen Schleifscheibe (10) und Werkstück (11) entstehenden Vibrationen verfügt.

9. Lünette nach Anspruch 8,
**dadurch gekennzeichnet,**
**dass** die Mittel zur aktiven Schwingungsdämpfung mindestens ein Piezoelement umfassen, bei dem durch Anlage einer äußeren Spannung eine mechanische Reaktion in Form eines Drucks oder eines Zugs in eine vorgebbare, entgegen einer Auslenkung des Werkstücks (11) wirkenden Richtung erfolgt.

10. Lünette nach Anspruch 8 oder 9,
**dadurch gekennzeichnet,**
**dass** die Lünette (2) über Mittel (3) zur Erfassung von Vibrationen verfügt.

11. Lünette nach einem der vorhergehenden Ansprüche,
**dadurch gekennzeichnet,**
**dass** die in mindestens einer Richtung senkrecht zu einer Längsachse des Werkstücks (11) schwimmende Lagerung der Klammer (5) mindestens ein zwischen Fuß (17) und Klammer (5) angeordnetes, mindestens eine parallel zur Längsachse des Werkstücks (11) verlaufende Schwenkachse (28) aufweisendes Gelenk (30) umfasst.

12. Lünette nach einem der vorhergehenden Ansprüche,
**dadurch gekennzeichnet,**
**dass** die Klammer (5) gegenüber dem Fuß (17) von einer Ausweichposition, in der die Klammer (5) nicht in Kontakt mit dem Werkstück (11) bringbar ist, in eine Eingreifposition verschwenkbar ist, in der die Klammer (5) in Kontakt mit dem Werkstück (11) bringbar ist.

13. Lünette nach einem der vorhergehenden Ansprüche,
**dadurch gekennzeichnet,**
**dass** im Bereich der Kontaktstellen zwischen Klammer (5) und Werkstück (11) Kühlmittel-Düsen angeordnet sind.

## Claims

1. A steady rest (2) for vibration-free holding of a workpiece (11), in particular a pilger mandrel (11), between its ends, the workpiece being intended to be machined in particular by means of a grinding wheel (10) and being clamped on both of its ends,
**characterized in that**
the steady rest (2) includes both a base (17) and a clamp (5), embracing the workpiece (11) on at least two opposed sides, into which clamp the workpiece (11) can be clamped by a clamping force, and the clamp (5) embraces the workpiece (11) in such a way that in the vicinity of the clamp (5), on the side of the workpiece toward the grinding wheel (10), machining can be done, and the clamp (5) is supported in floating fashion in at least one direction perpendicular to a longitudinal axis of the workpiece (11), so that the clamp (5) is self-centering relative to the workpiece (11), and the workpiece (11) is retained by the floatingly supported clamp (5) in a manner free of the external forces that vary the three-dimensional location of the workpiece (5), and motions of the workpiece (11) perpendicular to its longitudinal axis arc damped by the inertia of the clamp (5).

2. The steady rest as defined by claim 1,
**characterized in that**
weights (20, 21) can be disposed on the clamp (5), for adapting the inertia of the clamp (5) to a predeterminable damping.

3. The steady rest as defined by claim 2,
**characterized in that**
the weights (20, 21) are made from a vibration-damping material.

4. The steady rest as defined by claim 2 or 3,
**characterized in that**
the weights (20, 21) simultaneously serve to exert a clamping force that retains the workpiece (11) in the clamp (5).

5. The steady rest as defined by one of the foregoing claims,
**characterized in that**
in the vicinity of the contact points between the workpiece and the clamp, the clamp (5) is provided with replaceable inserts (24, 25), by the replacement of which inserts an adaptation of the clamp (5) to different workpieces (11) can be performed, and/or, by their replacement, a different number of contact points between the workpiece (11) and the clamp (5) can be brought about.

6. The steady rest as defined by one of the foregoing claims,
**characterized in that**
the base (17) is magnetic.

7. The steady rest as defined by one of the foregoing claims,
**characterized in that**
the clamp (5) is adjustable in height relative to the base (17).

8. The steady rest as defined by one of the foregoing claims,
**characterized in that**
the steady rest (2) has means for active vibration of vibration occurring from contact between the grinding wheel (10) and the workpiece (11).

9. The steady rest as defined by claim 8,
**characterized in that**
the means for active vibration damping include at least one piezoelectric element, in which by application of an external voltage, a mechanical reaction is effected, in the form of a pressure or tension in a predeterminable direction acting counter to a deflection of the workpiece (11).

10. The steady rest as defined by claim 8 or 9,
**characterized in that**
the steady rest (2) has means (3) for detecting vibration.

11. The steady rest as defined by one of the foregoing claims,
**characterized in that**
the floating support of the clamp (5) in at least one direction perpendicular to a longitudinal axis of the workpiece (11) includes at least one joint (30), disposed between the base (17) and the clamp (5) and having at least one pivot shaft (28) extending parallel to the longitudinal axis of the workpiece (11).

12. The steady rest as defined by one of the foregoing claims,
**characterized in that**
the clamp (5) is pivotable relative to the base (17) from a shunted position, in which the clamp (5) cannot be put into contact with the workpiece (11), into an engagement position, in which the clamp (5) can be put into contact with the workpiece (11).

13. The steady rest as defined by one of the foregoing claims,
**characterized in that**
coolant nozzles are disposed in the vicinity of the contact points between the clamp (5) and the workpiece (11).

## Revendications

1. Lunette (2) servant à maintenir sans vibrations entre ses extrémités une pièce (11), en particulier un mandrin à pas de pèlerin (11), cette pièce étant serrée à ses deux extrémités en vue d'être usinée notamment au moyen d'une meule (10), **caractérisée en ce que** la lunette (2) comprend un socle (17) disposé en position fixe par rapport à la pièce (11), et une pince (5) qui s'engage autour de la pièce (11) au moins par deux côtés opposés et dans laquelle la pièce (11) peut être maintenue sous l'action d'une force de serrage, sachant que la pince (5) s'engage autour de la pièce (11) de telle sorte qu'un usinage peut être effectué dans la région de la pince (5) sur le côté de la pièce (11) qui est tourné vers la meule (10), et sachant que la pince (5) est montée flottante dans au moins une direction perpendiculairement à un axe longitudinal de la pièce (11), de sorte que le centrage de la pince (5) par rapport à la pièce (11) est automatique, et que la pièce (11) est, par la pince (5) à montage flottant, maintenue sans forces extérieures modifiant la position de la pièce (11) dans l'espace, et les mouvements de la pièce (11) perpendiculairement à son axe longitudinal sont amortis par l'inertie de masse de la pince (5).

2. Lunette selon la revendication 1, **caractérisée en ce que** des poids (20, 21) peuvent être disposés sur la pince (5) afin d'adapter l'inertie de masse de la pince (5) à un amortissement prescriptible.

3. Lunette selon la revendication 2, **caractérisée en ce que** les poids (20, 21) sont fabriqués en un matériau amortissant les vibrations.

4. Lunette selon la revendication 2 ou 3, **caractérisée en ce que** les poids (20, 21) servent en même temps à exercer une force de serrage maintenant la pièce (11) dans la pince (5).

5. Lunette selon l'une des revendications précédentes, **caractérisée en ce que** la pince (5) est pourvue, dans la région des points de contact entre la pièce et la pince, d'inserts échangeables (24, 25) dont le remplacement permet d'effectuer une adaptation de la pince (5) à différentes pièces (11), et/ou dont le remplacement permet d'obtenir un nombre différent de points de contact entre la pièce (11) et la pince (5).

6. Lunette selon l'une des revendications précédentes, **caractérisée en ce que** le socle (17) est aimanté.

7. Lunette selon l'une des revendications précédentes, **caractérisée en ce que** la pince (5) est réglable en hauteur par rapport au socle (17).

8. Lunette selon l'une des revendications précédentes, **caractérisée en ce que** la lunette (2) dispose de moyens pour l'amortissement actif des vibrations produites par le contact entre la meule (10) et la pièce (11).

9. Lunette selon la revendication 8, **caractérisée en ce que** les moyens pour l'amortissement actif des vibrations comprennent au moins un élément piézoélectrique au moyen duquel, par application d'une tension électrique externe, une réaction mécanique sous la force d'une pression ou d'une traction a lieu dans une direction prédéfinissable, agissant à l'encontre d'une déflexion de la pièce (11).

10. Lunette selon la revendication 8 ou 9, **caractérisée en ce que** la lunette (2) dispose de moyens (3) pour détecter les vibrations.

11. Lunette selon l'une des revendications précédentes, **caractérisée en ce que** le montage de la pince (5), flottant dans au moins une direction perpendiculairement à un axe longitudinal de la pièce (11), comprend au moins une articulation (30) disposée entre le socle (17) et la pince (5) et présentant au moins un axe de pivotement (28) s'étendant parallèlement à l'axe longitudinal de la pièce (11).

12. Lunette selon l'une des revendications précédentes, **caractérisée en ce que** la pince (5) peut être pivotée par rapport au socle (17), depuis une position d'évitement dans laquelle la pince (5) ne peut pas être amenée en contact avec la pièce (11), dans une position d'engagement dans laquelle la pince (5) peut être amenée en contact avec la pièce (11).

13. Lunette selon l'une des revendications précédentes, **caractérisée en ce que** des buses d'agent de refroidissement sont disposées dans la région des points de contact entre la pince (5) et la pièce (11).
